(19) **Europäisches Patentamt / European Patent Office / Office européen des brevets**

(11) **EP 4 618 017 A1**

(12) # EUROPEAN PATENT APPLICATION

(43) Date of publication:
**17.09.2025   Bulletin 2025/38**

(21) Application number: **24163290.0**

(22) Date of filing: **13.03.2024**

(51) International Patent Classification (IPC):
*G06T 7/246* (2017.01)

(52) Cooperative Patent Classification (CPC):
**G06T 7/246;** G06T 2207/10056; G06T 2207/10064;
G06T 2207/20081; G06T 2207/20084;
G06T 2207/30024; G06T 2207/30241

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Sartorius Stedim Data Analytics AB**
 **903 33 Umeå (SE)**
• **Deutsches Forschungszentrum für Künstliche Intelligenz GmbH (DFKI)**
 **67663 Kaiserslautern (DE)**

(72) Inventors:
• **Sjögren, Rickard**
 **904 41 Röbäck (SE)**
• **Edlund, Christoffer**
 **903 32 Umeå (SE)**
• **Khalid, Nabeel**
 **67663 Kaiserslautern (DE)**
• **Ahmed, Sheraz**
 **67663 Kaiserslautern (DE)**

(74) Representative: **Müller-Boré & Partner Patentanwälte PartG mbB**
 **Friedenheimer Brücke 21**
 **80639 München (DE)**

(54) **COMPUTER-IMPLEMENTED METHOD, COMPUTER PROGRAM PRODUCT AND SYSTEM FOR LABEL-FREE CELL TRACKING**

(57)    A computer-implemented method is provided for label-free cell tracking. The method comprises: obtaining a first time-lapse sequence (50) of cells and a second time-lapse sequence (52) of the cells, wherein: the first time-lapse sequence (50) comprises fluorescence images of the cells, the second time-lapse sequence (52) comprises label-free images of the cells, the label-free images corresponding to the fluorescence images in the first time-lapse sequence (50), and each one of the fluorescence images in the first time-lapse sequence (50) is captured at a time point corresponding to a time point at which a corresponding one of the label-free images in the second time-lapse sequence (52) is captured; identifying, within each one of the fluorescence images in the first time-lapse sequence (50), positions of the cells; matching, using an object tracking algorithm, the identified positions of each one of the cells through time in the fluorescence images in the first time-lapse sequence (50); generating, based on the matching, annotations indicating movements of each one of the cells through time; and training a machine learning model (30) using the second time-lapse sequence (52) and the generated annotations, the machine learning model (30) being trained to track cells in an input time-lapse sequence including label-free images.

**Description**

The application relates to a computer-implemented method, computer program product and system for label-free cell tracking.

**BACKGROUND**

Object tracking is a computer vision problem where individual objects are not only detected in an image, but they are also assigned an identity and tracked through time. In microscopic image analysis, cell tracking may be of high interest to be able to study cell behavior over time. For instance, without cell tracking, it may be difficult to quantify the movement of individual cells to study motility. Tracking may also be needed to study individual cell changes in morphology, where, for instance, cells of a certain morphology may change into another one. Further, tracking can allow characterization of cell-cell-interactions in better detail by being able to study how long individual cells are in proximity to others.

For the above reasons, cell tracking is a well-studied problem and there are many approaches available to do so (see e.g., Ulman, Vladimir, et al. "An objective comparison of cell-tracking algorithms", Nature methods 14.12 (2017), 1141-1152). For example, many heuristic-based approaches rely on matching cells detected in adjacent frames based on morphology similarity. These types of approaches can work well to detect objects with high contrast, for instance fluorescently labelled nuclei or cells in low density cultures. These approaches, however, tend to break down in high-density, label-free scenarios where contrast is lower, and it can be challenging to design a heuristic on how to separate nearby cells. These approaches may also be unable to cope with low frame-rate imaging, which may be necessary in high-throughput scenarios where it is infeasible to acquire high frame-rate time lapses for many wells in parallel. To overcome these limitations, machine learning-based methods using artificial neural networks trained on large datasets have also been adopted (see e.g., Hayashida et al., "Cell tracking with deep learning for cell detection and motion estimation in low-frame-rate", International Conference on Medical Image Computing and Computer-Assisted Intervention, Springer, Cham, 2019).

Machine learning-based methods usually rely on training data to perform well. Thus, for cell tracking, machine learning-based methods may require exemplary videos of cells moving through time where the location and identity of cells have been marked. Conventional approaches often rely on bounding boxes, meaning rectangles indicating each individual cell, that are moved between each time point adjusted for size changes. Annotating bounding boxes for tracking, may be excruciatingly labor-some and time consuming. Recently, machine learning-based approaches to track each individual object as a single, central, points were developed (Hayashida et al., "Cell tracking with deep learning for cell detection and motion estimation in low-frame-rate", International Conference on Medical Image Computing and Computer-Assisted Intervention, Springer, Cham, 2019) to facilitate annotation. Assigning a single point per object that is tracked through time may be more efficient compared to bounding boxes.

Even though point-based tracking can facilitate annotation, it may still require annotated ground truth data to work well. Due to the vast diversity in cell types, treatments and assay types, collecting annotated data that is representative for all possible use cases may be challenging.

Accordingly, successful cell tracking in label-free, low frame rate and/or high density scenario may be extremely challenging. Thus, existing methods of cell tracking have been mainly limited to fluorescence imaging scenarios and/or low-density imaging.

**SUMMARY**

According to an aspect, the problem relates to facilitating label-free cell tracking. The problem is solved by the features disclosed by the independent claims. Further exemplary embodiments are defined by the dependent claims.

According to an aspect, a computer-implemented method is provided for label-free cell tracking. The method comprises:

obtaining a first time-lapse sequence of cells and a second time-lapse sequence of the cells, wherein:

the first time-lapse sequence comprises fluorescence images of the cells,
the second time-lapse sequence comprises label-free images of the cells, the label-free images corresponding to the fluorescence images in the first time-lapse sequence, and
each one of the fluorescence images in the first time-lapse sequence is captured at a time point corresponding to a time point at which a corresponding one of the label-free images in the second time-lapse sequence is captured;

identifying, within each one of the fluorescence images in the first time-lapse sequence, positions of the cells;
matching, using an object tracking algorithm, the identified positions of each one of the cells through time in the fluorescence images in the first time-lapse sequence;

generating, based on the matching, annotations indicating movements of each one of the cells through time; and

training a machine learning model using the second time-lapse sequence and the generated annotations, the machine learning model being trained to track cells in an input time-lapse sequence including label-free images.

In the present disclosure, the "fluorescence images" of the cells and the "label-free images" of the cells may be microscopic images of the cells.

Further, in the present disclosure, the "label-free images" of the cells may be images including cells without any label (e.g., by a fluorescent marker).

In various aspects and embodiments described herein, each one of the fluorescence images in the first time-lapse sequence and the corresponding one of the label-free images in the second time-lapse sequence may be considered as forming an image pair. Thus, in various aspects and embodiments described herein, the first time-lapse sequence and the second time-lapse sequence may have a same frame rate.

In various aspects and embodiments described herein, training data for the training of the machine learning model may be generated using the second time-lapse sequence and the generated annotations. For example, the generated annotations may be incorporated into the label-free images in the second time-lapse sequence and the resulting image sequence with the generated annotations may be used as the training data representing ground truth when training the machine learning model.

The method according to the above-stated aspect can facilitate label-free cell tracking since the machine learning model is trained to track cells in an input time-lapse sequence including label-free images.

Further, in the method according to the above-stated aspect, the training of the machine learning model is performed using the annotations generated by processing the second time-lapse sequence including fluorescence images. Since fluorescence images tend to have higher contrast than label-free images, it may be easier for a computer to generate accurate annotations indicating movements of each cell by processing fluorescence images than in case of generating such annotations by processing label-free images. Thus, the method according to the above-stated aspect can efficiently generate training data for the training of the machine learning model, which can facilitate label-free cell tracking.

In some exemplary embodiments, the method according to the above-stated aspect may further comprise:

obtaining a third time-lapse sequence of cells, the third time-lapse sequence including label-free images of the cells;

inputting the third time-lapse sequence as the input time-lapse sequence to the trained machine learning model; and

obtaining, from the trained machine learning model, an output time-lapse sequence including information indicating the cells tracked in the third time-lapse sequence.

Accordingly, the cells present in the label-free images comprised in the third time-lapse sequence can be tracked using the trained machine learning model.

The third time-lapse sequence may be a new time-lapse sequence that is different from the second time-lapse sequence used for training the machine learning model. For example, the label-free images comprised in the third time-lapse sequence may be of cells different from but the same type as those included in the label-free images of the second time-lapse sequence.

In various aspects and embodiments described herein:

the time point at which one of the fluorescence images in the first time-lapse sequence is captured, and

the time point at which the corresponding one of the label-free images in the second time-lapse sequence is captured,

may occur within a specified delay.

The specified delay may be defined as a fraction of a time interval defined by a frame rate of the first and second time-lapse sequences. More specifically, the specified delay may be not larger than about 0.2 times, optionally not larger than about 0.1 times, further optionally not larger than about 0.05 times, or even not larger than about 0.02 times the time interval between subsequent images in the first and/or second time-lapse sequence. For example, thereby the specified delay may have a duration so that the two time points can be considered as occurring substantially at the same time, as compared to the time interval defined by the frame rate of the first and second time-lapse sequences. For a specific example, the specified time delay may be equal to or smaller than 1.0 second when the time interval defined by the frame rate of the first and second time-lapse sequences is in an order of minutes (e.g., five minutes or more). For example, said time interval may correspond to the inverse of the respective frame rate.

In various aspects and embodiments described herein, each pixel in each one of the fluorescence images in the first time-lapse sequence may have a corresponding pixel in the corresponding one of the label-free images in the second time-lapse sequence. In other words, each one of the fluorescence images in the first time-lapse sequence may be pixel matched with the corresponding one of the label-free images in the second time-lapse sequence.

In various aspects and embodiments described herein, a frame rate of the input time-lapse sequence for the machine learning model may be equal to or lower than a frame rate of the first and second time-lapse sequences.

Accordingly, in some exemplary embodiments, the frame rate of the input time-lapse sequence for the machine learning model may be lower than that of the first and second time-lapse sequences. In such exemplary embodiments, at least part of the label-free images in the second time-lapse sequence and of the generated annotations may be left out when training the machine learning model to set the frame rate of the input time-lapse sequence to be lower than that of the first and second time-lapse sequences. This may be done by removing frames from the first time-lapse sequence once the tracks have been identified from the second time-lapse sequence and mapped to the first time-lapse sequence. In other words, when tracks are generated from paired label-free and fluorescence time-lapse sequences acquired use a 5-minutes frame rate, for example, a 15-minuntes frame rate machine learning model can be trained, for example, by using every third frame from the time-lapse sequence and tracks.

In various aspects and embodiments described herein, the annotations may include, for each one of the cells in each one of the fluorescence images, information indicating:

a current position of said one of the cells in said one of the fluorescence images; and
a previous position of said one of the cells in a previous one of the fluorescence images comprised in one frame prior to a frame comprising said one of the fluorescence images. With the current position and the previous position of said one of the cells, a movement of said one of the cells from the previous position to the current position may be represented.

In various aspects and embodiments described herein, the positions of the cells identified within each one of the fluorescence images in the first time-lapse sequence may represent positions of center points of the cells, each center point being a nucleus center of mass of each cell.

In various aspects and embodiments described herein, the label-free images may be phase contrast images, brightfield images or darkfield images.

In various aspects and embodiments described herein, the fluorescence images may be captured using a nucleus fluorescent marker. In some exemplary embodiments, the nucleus fluorescent marker may be Hoechst marker or Nuclight.

In various aspects and embodiments described herein, the machine learning model may comprise an artificial neural network.

Further, in various aspects and embodiments described herein, the machine learning model may comprise:

a detector configured to detect positions of the cells in the input time-lapse sequence; and
a tracker configured to track each detected cell in the input time-lapse sequence through time.

According to another aspect, another computer-implemented method is provided for label-free cell tracking. The other method comprises:

obtaining an input time-lapse sequence including label-free images of cells;
inputting the input time-lapse sequence to a machine learning model that is trained to track cells in the input time-lapse sequence; and
obtaining, from the machine learning model, an output time-lapse sequence including information indicating the cells tracked in the input time-lapse sequence,
wherein the machine learning model has been trained by:

obtaining a first time-lapse sequence of cells and a second time-lapse sequence of the cells, wherein:

the first time-lapse sequence comprises fluorescence images of the cells,
the second time-lapse sequence comprises label-free images of the cells, the label-free images in the second time-lapse sequence corresponding to the fluorescence images in the first time-lapse sequence, and
each one of the fluorescence images in the first time-lapse sequence is captured at a time point corresponding to a time point at which a corresponding one of the label-free images in the second time-lapse sequence is captured;

identifying, within each one of the fluorescence images in the first time-lapse sequence, positions of the cells;
matching, using an object tracking algorithm, the identified positions of each one of the cells through time in the fluorescence images in the first time-lapse sequence;
generating, based on the matching, annotations indicating movements of each one of the cells through time; and
training the machine learning model using the second time-lapse sequence and the generated annotations.

It is noted that any one of the features of the exemplary embodiments and variations described above with respect to the method according to the above-stated aspect may also be comprised in the other method according to the other aspect.

According to yet another aspect, a computer program product is provided. The computer program product comprises computer-readable instructions that, when loaded and run on a computer, cause the computer to perform the method according to any one of the above-stated aspects and embodiments thereof.

According to yet another aspect, a system is provided for label-free cell tracking. The system comprises:

a processor configured to perform the method according to any one of the above-stated aspects and embodiments thereof; and
a live-cell imaging system comprising:

a fluorescence optics module configured to obtain fluorescence images of cells; and
a label-free optics module configured to obtain label-free images of the cells,

wherein the live-cell imaging system is configured to capture a fluorescence image by the fluorescence optics module and a label-free image by the label-free optics module such that:

the time point at which one of the fluorescence images in the first time-lapse sequence is captured, and
the time point at which the corresponding one of the label-free images in the second time-lapse sequence is captured,
occur within a specified delay.

According to any one of various aspects and embodiments described herein, resulting tracking of the cells in a time-lapse sequence that is input to the machine learning model may be robust even in challenging situations, such as low frame rate and high density.

Further, cell tracking in any one of various aspects and embodiments described herein can work in label-free situations, eliminating the need of, for instance, fluorescent nuclear labels for tracking in the input time-lapse sequence. This may either allow completely label-free experiments or freeing up image channels for other fluorescent labels of interest.

Generally speaking, machine learning models need to be trained on data representative for the application of interest in order to work well. Considering the diversity of cell types, experiments and treatments, it may be hardly feasible for a single organization to collect training data for all possible applications of interest. Any one of various aspects and embodiments described herein can allow end users (e.g., biologists) to be able to build a new tracker for their particular application of interest, by running a single experiment with fluorescent nucleus markers under high frame rate to obtain a robust tracker for their particular workflow.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. In some examples, the system may be a general purpose computer system. In other examples, the system may be a special purpose computer system including an embedded system.

## BRIEF DESCRIPTION OF THE DRAWINGS

Details of one or more implementations are set forth in the exemplary drawings and description below. Other features will be apparent from the description, the drawings, and from the claims. It should be understood, however, that even though embodiments are separately described, single features of different embodiments may be combined to further embodiments.

**Fig. 1** shows a functional block diagram of an exemplary system according to the present disclosure.

**Fig. 2** shows a schematic diagram of an exemplary machine learning model for label-free cell tracking.

**Fig. 3** shows an illustration of an example of the live-cell imaging system shown in Fig. 1.

**Fig. 4** shows a flowchart of an exemplary process for training the machine learning model for label-free cell tracking.

**Fig. 5** shows a workflow of a specific implementation of the exemplary training process shown in Fig. 4.

**Fig. 6** shows examples of a phase contrast image of cells and of a fluorescence image of the cells.

**Fig. 7** shows an illustration of how pairs of label-free images and fluorescence images may be used to construct training data for the machine learning model.

**Fig. 8** shows a flowchart of an exemplary process for label-free cell tracking.

**Fig. 9** shows an exemplary hardware configuration of a computer that may be used to implement at least a part of a system according to the present disclosure.

## DETAILED DESCRIPTION OF EMBODIMENTS

In the following text, a detailed description of examples will be given with reference to the drawings. It should be understood that various modifications to the examples may be made. In particular, one or more elements of one example may be combined and used in other examples to form new examples.

### System Configuration

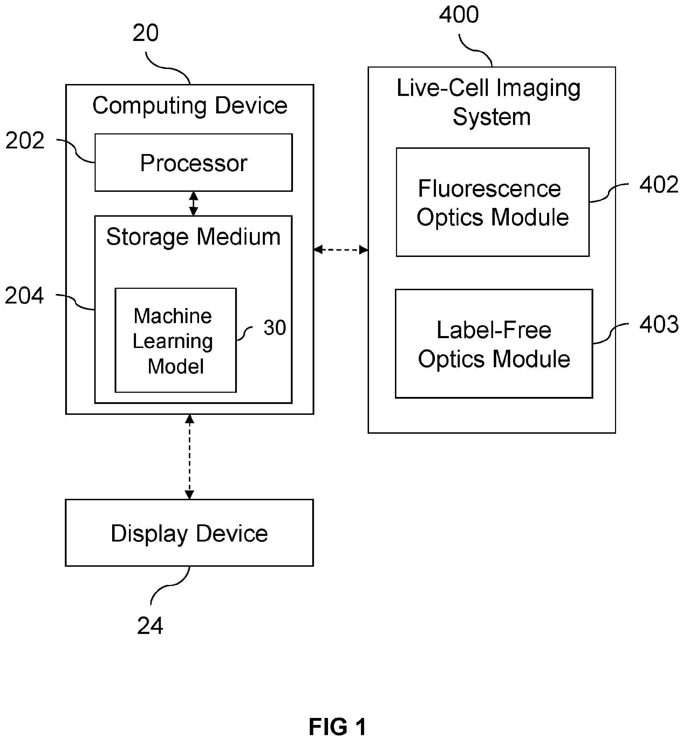

**Fig. 1** shows a functional block diagram of an exemplary system according to the present disclosure. The exemplary system shown in Fig. 1 comprises a computing device 20 and a live-cell imaging system 400.
The computing device 20 may be a computer connected to a display device 24 and the live-cell imaging system 400, via a wired connection or via one or more wired and/or wireless networks, for example. The computing device 20 may comprise a processor 202 and a storage medium 204. The processor 202 may be configured to perform one or more processes for label-free tracking according to the present disclosure.
The storage medium 204 may be configured to store information necessary for the processor 202 to perform the one or more processes for label-free cell tracking and/or information that is generated by the processor 202. For example, the storage medium 204 may store a machine learning model 30 for label-free cell tracking. The machine learning model 30 may be configured to, for example, receive an input time-lapse sequence comprising label-free images of cells and output an output time-lapse sequence including information indicating the cells tracked in the input time-lapse sequence.

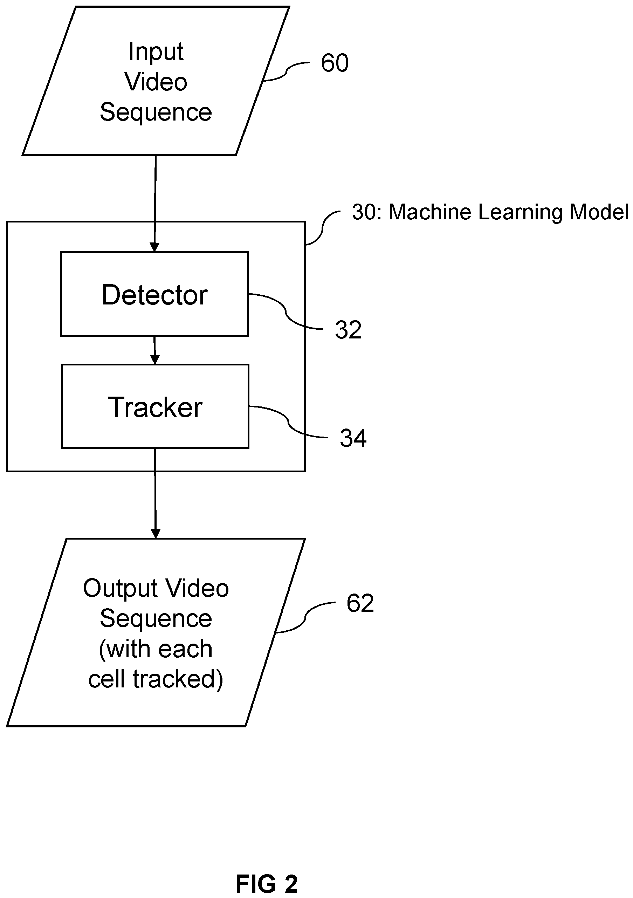

**Fig. 2** shows a schematic diagram of an example of the machine learning model 30 stored in the storage medium 204 of the computing device 20 shown in Fig. 1. As can be seen from Fig. 2, an input image sequence 60 (e.g., an input time-lapse sequence comprising label-free images) may be passed to the machine learning model 30 and an output image sequence 62 may be generated with each cell center detected and tracked, e.g. during its lifecycle.
In the specific example of Fig. 2, the machine learning model 30 comprises a detector 32 and a tracker 34. The detector 32 and/or the tracker 34 may be implemented using one or more artificial neural networks (ANNs).
The detector 32 may be configured to detect positions of the cells in the input image sequence 60 using an object detection algorithm. The object detection algorithm may be an algorithm that enables detection of one or more objects of interest (e.g., cells in the present disclosure) in an image. The object detection algorithm may involve one or more ANNs. A non-limiting example of the object detection algorithm is YOLOX in which an ANN takes an image as an input, predicts a bounding box for each detected object in the image and gives a confidence score for each detection (see e.g., Ge, Zheng, et al., "Yolox: Exceeding yolo series in 2021", arXiv preprint arXiv:2107.08430, 2021).
The tracker 34 may be configured to track each cell through time using a tracking algorithm. The tracker 34 may be configured to assign identification information to each cell (e.g., cell ID) and generate information including the identification information of each cell associated with information indicating positions of the cell in each frame of the input image sequence 60. The tracking algorithm may be an algorithm that enables tracking each object detected by the detector 32 in images included in a time-lapse sequence. The tracking algorithm may involve one or more ANNs. A non-limiting example of the tracking algorithm is ByteTrack in which objects detected with high detection scores are first associated and then the remaining objects with low detection scores are associated using the similarity with the tracklets for recovery of the true missing objects (see e.g., Zhang, Yifu, et al., "ByteTrack: Multi-object tracking by associating every detection box", arXiv preprint arXiv:2110.06864, 2021).
It is noted that the machine learning model 30 with the detector 32 and the tracker 34 shown in Fig. 2 is a mere example and the machine learning model 30 may have a configuration different from the example of Fig. 2. For instance, the machine learning model 30 does not necessarily have the detector 32 and the tracker 34 separately, as long as the machine learning model 30 is capable of taking a time-lapse sequence of label-free images of cells as the input and outputting an output time-lapse sequence with the cells being tracked. Examples of algorithms employed for the machine learning model 30 without a clear separation of the detector 32 and the tracker 34 may include, but are not limited to, CenterTrack (see e.g., Zhou et al., "Tracking Objects as Points", ECCV, 2020, arXiv:2004.01177) and point-based cell tracking (see e.g., Hayashida et al., "Consistent Cell Tracking in Multi-Frames With Spatio-Temporal Context by Object-Level Warping Loss", Proceedings of the IEEE/CVF Winter Conference on Applications of Computer Vision, 2022; Hayashida et al., "Cell tracking with deep learning for cell detection and motion estimation in low-frame-rate", International Conference on Medical Image Computing and Computer-Assisted Intervention, Springer, Cham, 2019; Hayashida et al., "MPM: Joint representation of motion and position map for cell tracking", Proceedings of the IEEE/CVF Conference on Computer Vision and Pattern Recognition, 2020).

Referring again to Fig. 1, the processor 202 of the computing device 20 may train the machine learning model 30 using images obtained from the live-cell imaging system 400, for example. Further, for example, the processor 202 may use the trained machine learning model 30 to track cells in an input image sequence of label-free images obtained from the live-cell imaging system 400. Details of the processes that may be performed by the processor 202 will be described later below.

The live-cell imaging system 400 may be configured to capture fluorescence images and label-free images of cells. The live-cell imaging system 400 may comprise fluorescence optics module 402 and label-free optics module 403. The fluorescence optics module 402 may include one or more fluorescence microscopes for capturing fluorescence images of cells. The label-free optics module 403 may include one or more microscopes for capturing label-free images of cells, e.g., phase contrast images, brightfield images and/or darkfield images.

The live-cell imaging system 400 may be configured to capture a fluorescence image by the fluorescence optics module 402 and a label-free image by the label-free optics modules 403 within a specified time delay. In other words, the live-cell imaging system 400 may be configured to capture a fluorescence image and a label-free image such that a time point at which the fluorescence image is captured and a time point at which the label-free image is captured occur within the specified delay. Accordingly, the live-cell imaging system 400 can capture, within a single experiment, a first time-lapse sequence comprising fluorescence images of cells and a second time-lapse sequence comprising label-free images of the cells, where each one of the fluorescence images and a corresponding one of the label-free images are captured within the specified delay. The specified delay may be defined as a fraction of a time interval defined by a frame rate of the first and second time-lapse sequences, i.e. the time interval may correspond to the inverse of the frame rate. For example, the specified delay may have a duration so that the two time points can be considered as occurring substantially at the same time, as compared to the time interval defined by the frame rate of the first and second time-lapse sequences. For a specific example, the specified time delay may be equal to or smaller than 1.0 second when the frame rate of the first and second time-lapse sequences defines a time interval in an order of minutes (e.g., five minutes or more). The frame rate of the first and second time-lapse sequences may be chosen to be high enough to enable robust tracking of fluorescent objects. The exact frame rate may depend on the cell-type and condition-specific movement speed.

The live-cell imaging system 400 can also capture a single time-lapse sequence comprising only fluorescence images or only label-free images. A user of the live-cell imaging system 400 may instruct the live-cell imaging system 400, using an input device (not shown) provided on or in communication with the live-cell imaging system 400, to capture, in a single experiment, either two corresponding time-lapse sequences (e.g., of fluorescence images and of label-free images) or a single time-lapse sequence (e.g., of label free images).

Further, the live-cell imaging system 400 may be configured to provide the captured images (e.g., fluorescence images and/or label-free images) to the computing device 20. The computing device 20 may perform the one or more processes for label-free cell tracking according to the present disclosure using the images received from the live-cell imaging system 400.

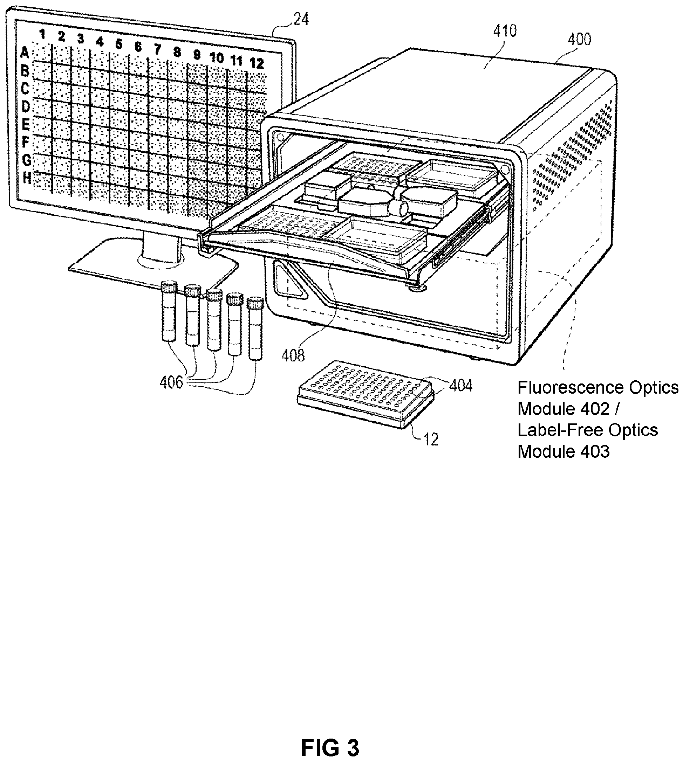

Although not shown in Fig. 1, the live-cell imaging system 400 may further comprise a processor and a storage medium for performing control processes to control components (e.g., the fluorescence optics module 402 and the label-free optics module 403) comprised in the live-cell imaging system 400. Further details of the live-cell imaging system 400 will be described later with reference to Fig. 3.

It is noted that Fig. 1 shows a mere example of the system according to the present disclosure and different system configurations are also possible. For example, although in Fig. 1 the computing device 20 is provided separately from the live-cell imaging system, in some exemplary embodiments, the computing device 20 may be integrated into the live-cell imaging system 400 as a single device. Further, for example, in some exemplary embodiments, the computing device 20 may be implemented with more than one computer connected to each other via one or more wired and/or wireless networks.

**Fig. 3** shows an illustration of an example of the live-cell imaging system 400 shown in Fig. 1. As can be seen from Fig. 3, the live-cell imaging system 400 may have a housing 410, the entirety of which could be placed inside a temperature and humidity controlled incubator (not shown) during use. The live-cell imaging system 400 may be designed to receive microwell plates 12 which include a multitude of sample holding wells 404, each of which may receive a live-cell sample. One or more of a set of fluorescence reagents 406 may be added to each of the sample wells 404 so as to enable fluorescence measurements from the live-cell sample to be obtained. The computing device 20 (see Fig. 1) or an associated workstation (not shown) other than the computing device 20 may implement image analysis software. The results of live-cell experiments conducted on the sample may be displayed on the display device 24 by the computing device 20 or the associated workstation. The live-cell imaging system 400 may include a tray 408 which slides out of the system and allows the microwell plate 12 to be inserted onto the tray 408 and then retracts and closes so as to place the microwell plate 12 within the interior of the live-cell imaging system housing 410. The fluorescence optics module 402 and the label-free optics module 403 may be provided within the interior of the live-cell imaging system housing 410, below the space that can accommodate the microwell plate 12. The microwell plate 12 may remain stationary within the housing while the fluorescence optics module 402 and/or the label-free optics module 403 move relative to the plate 12 and capture a series of fluorescence images and/or label-free images over the course of an experiment. Specific implementation details of the fluorescence optics module 402 and the label-free optics module 403 are known to a person skilled in the art.

**Exemplary Processes**

The computing device 20 may perform one or more processes for label-free cell tracking using the machine learning model 30.

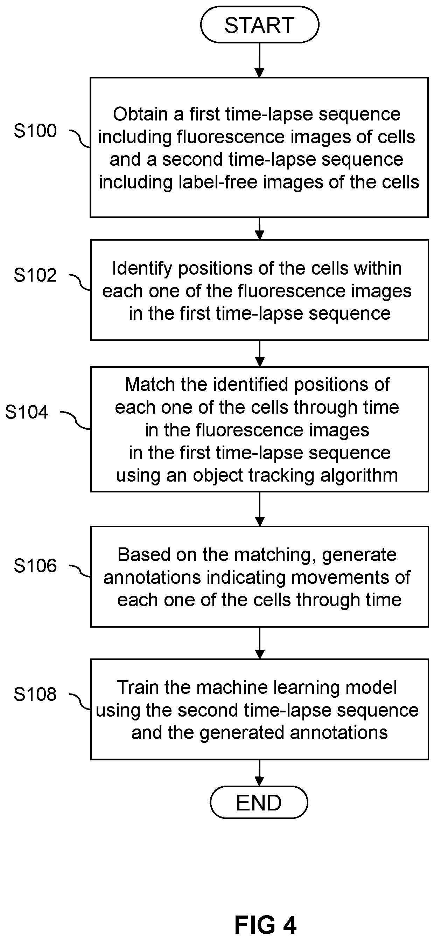

**Fig. 4** shows a flowchart of an exemplary process for training the machine learning model 30 for label-free cell tracking. The exemplary process shown in Fig. 4 may be performed by the processor 202 of the computing device 20. The processor 202 may start the exemplary process shown in Fig. 4 when a user instructs the computing device 20 to start training of the machine learning model 30, using an input device (not shown) connected to the computing device 20, for example.

Referring to Fig. 4, at step S100, the processor 202 may obtain a first time-lapse sequence including fluorescence images of cells and a second time-lapse sequence including label-free images of the cells. For example, the processor 202 may obtain the first and second time-lapse sequences from the live-cell imaging system 400. In some exemplary embodiments, the processor 202 may receive the first and second time-lapse sequences via a computer that is separate from the computing device 20 and that obtains the first and second time-lapse sequences from the live-cell imaging system 400. Such a computer may be, for example, a workstation (not shown) associated with and connected to the live-cell imaging system 400 or a computer comprised in a database system that store and manage images captured by the live-cell imaging system 400.

The first and second time-lapse sequences received at step S100 may have the same frame rate. The frame rate of the first and second time-lapse sequences may be chosen to be high enough to enable robust tracking of fluorescent objects. The exact frame rate may depend on the type of the cells being imaged and condition-specific movement speed. An exemplary frame rate may be one image every 5 minutes.

Further, the fluorescence images in the first time-lapse sequence obtained at step S100 may correspond to (in other words, paired with) the label-free images in the second time-lapse sequence obtained at step S100. For instance, each one of the fluorescence images in the first time-lapse sequence may have been captured by the live-cell imaging system 400 at a time point corresponding to a time point at which a corresponding one of the label-free images in the second time-lapse sequence was captured by the live-cell imaging system 400. More specifically, the time point at which one of the fluorescence images in the first time-lapse sequence is captured and the time point at which the corresponding one of the label-free images in the second time-lapse sequence is captured may occur within a specified delay that may be defined as a fraction of the time interval defined by the frame rate of the first and second time-lapse sequences. For example, the specified delay may have a duration so that the two time points can be considered as occurring substantially at the same time, as compared to the frame rate of the first and second time-lapse sequences. For a specific example, the specified time delay may be equal to or smaller than 1.0 second when the frame rate of the first and second time-lapse sequences defines a time interval in an order of minutes (e.g., five minutes or more). Accordingly, each fluorescence image in the first time-lapse sequence and its corresponding label-free image in the second time-lapse sequence may be considered as being captured substantially at the same time.

Further, each pixel in each fluorescence image in the first time-lapse sequence obtained at step S100 may have a corresponding pixel in the corresponding label-free image in the second time-lapse sequence obtained at step S100. In other words, each fluorescence image and its corresponding label-free image may be pixel matched.

After step S100, the exemplary process of Fig. 4 may proceed to step S102.

At step S102, the processor 202 may identify positions of the cells within each one of the fluorescence images in the first time-lapse sequence obtained at step S100. The positions of the cells identified within each fluorescence image may represent positions of center points of the cells, each center point being a nucleus center of mass of each cell, for example. For example, the nucleus center of mass of each cell may be calculated by segmenting the fluorescence images by thresholding or the watershed algorithm. The processor 202 may store the identified positions in the storage medium 204. After step S102, the exemplary process of Fig. 4 may proceed to step S104.

At step S104, the processor 202 may match the identified positions of each one of the cells through time in the fluorescence images in the first time-lapse sequence using an object tracking algorithm. A known object tracking algorithm may be used at step S104. For example, in some exemplary embodiments, the object tracking algorithm used at step S104 may be an out-of-the-box machine learning-based tracker for nucleus tracking. Further, in other exemplary embodiments, a known heuristic-based tracker may be used as the object tracking algorithm at step S104. Examples of the heuristic-based tracker may include, but are not limited to, Kalman filters, boosting tracker, kernelized correlation filters (KCF), discriminative correlation filter (e.g., CSRT tracker (discriminative correlation filter with channel and spatial reliability)), minimum output sum of squared error (MOSSE), multiple instance learning (MIL), Median Flow tracker, Lucas-Kanade tracker, etc.

In the matching step S104, each cell in the first time-lapse sequence of the fluorescence images may be assigned identification information (e.g., a cell ID) and the positions of the cell in different fluorescence images of different time points may be associated with the identification information of the cell. Thus, for each cell, the cell ID and the positions of the cell in the fluorescence images in the first time-lapse sequence in a time order may be obtained as a result of step S104. The processor 202 may store the result of step S104 in the storage medium 204.

After step S104, the exemplary process of Fig. 4 may proceed to step S106.

At step S106, the processor 202 may generate, based on the matching at step S104, annotations indicating movements of each one of the cells through time. For example, the annotations may include, for each cell in each fluorescence image in the first time-lapse sequence, information indicating a current position of the cell in the fluorescence image and a previous position of the cell in a previous fluorescence image in a previous frame of the first time-lapse sequence. The previous frame may be understood as a frame that is one frame prior to the frame comprising the current fluorescence image of interest. With the current position and the previous position of said one of the cells, a movement of said one of the cells from the previous position to the current position may be represented. Further, the processor 202 may convert the annotations to a format suitable for training of the machine learning model 30 in the following step S108, for example, representing the positions in pixel coordinates of the cell center points. The processor 202 may store the generated annotations in the storage medium 204. After step S106, the exemplary process of Fig. 4 may proceed to step S108.

At step S108, the processor 202 may train the machine learning model 30 using the second time-lapse sequence obtained at step S100 and the annotations generated at step S106. The machine learning model 30 may be trained to track cells in an input time-lapse sequence including label-free images. For example, the processor 202 may generate training data from the second time-lapse sequence and the generated annotations and train the machine learning model 30. The training data may comprise, for example, at least part of the second time-lapse sequence as the input time-lapse sequence and at least a corresponding part of ground truth data related to the correspondingly generated annotations. In other words, the ground truth data may refer to examples of intended output of the model given the input. In this case the ground truth may be the tracks generated from the first time-lapse sequence. Thus, the combination of the second time-lapse sequence and the generated annotations/ground truth may comprise the training dataset. The machine learning model 30 may be trained to output a time-lapse sequence including information indicating the cells tracked in the input time-lapse sequence such that the output time-lapse sequence comprises cell tracking information that is within an error margin as compared to the cell tracking information in the ground truth data based on the second time-lapse sequence and the generated annotations.

In some exemplary embodiments, a frame rate of the input time-lapse sequence of the machine learning model 30 may be equal to the frame rate of the first and second time-lapse sequences obtained at step S100. In such exemplary embodiments, the processor 202 may use information from all frames of the second time-lapse sequence and the generated annotations for the training at step S108.

In other exemplary embodiments, the frame rate of the input time-lapse sequence of the machine learning model 30 may be lower than the frame rate of the first and second time-lapse sequences obtained at step S100. In such exemplary embodiments, at least part of the label-free images in the second time-lapse sequence and of the generated annotations may be left out when training the machine learning model at step S108 to set the frame rate of the input time-lapse sequence to be lower than that of the second time-lapse sequence. In such exemplary embodiments, the trained machine learning model 30 may be able to perform cell tracking for a time-lapse sequence of label-free images with a relatively low frame rate (e.g., at least lower than the frame rate of the first and second time-lapse sequences).

The processor 202 may store the trained machine learning model 30 (e.g., parameters of the machine learning model 30 after the training) in the storage medium 204.

After step S108, the exemplary process of Fig. 4 may end.

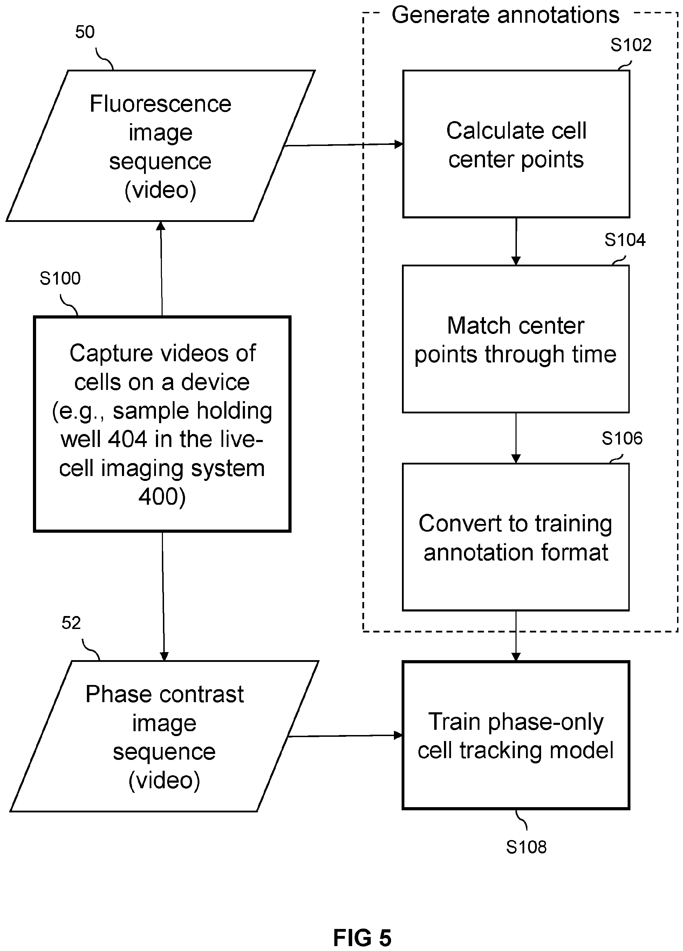

**Fig. 5** shows a workflow of a specific implementation of the exemplary training process shown in Fig. 4. In Fig. 5, process steps corresponding to those in Fig. 4 are assigned to the same reference signs as in Fig. 4. Referring to step S100 of Fig. 5, the live-cell imaging system 400 may capture videos (e.g., time-lapse sequences) of cells on a device such as the sample holding well 404 of the live-cell imaging system 400 (see also, Fig. 3). The resulting videos, a fluorescence image sequence 50 (corresponding to the first time-lapse sequence) and a phase contrast image sequence 52 (corresponding to the second time-lapse sequence) may be received by the processor 202 of the computing device 20. In the specific implementation of Fig. 5, phase contrast images are used as the label-free images in the second time-lapse sequence.

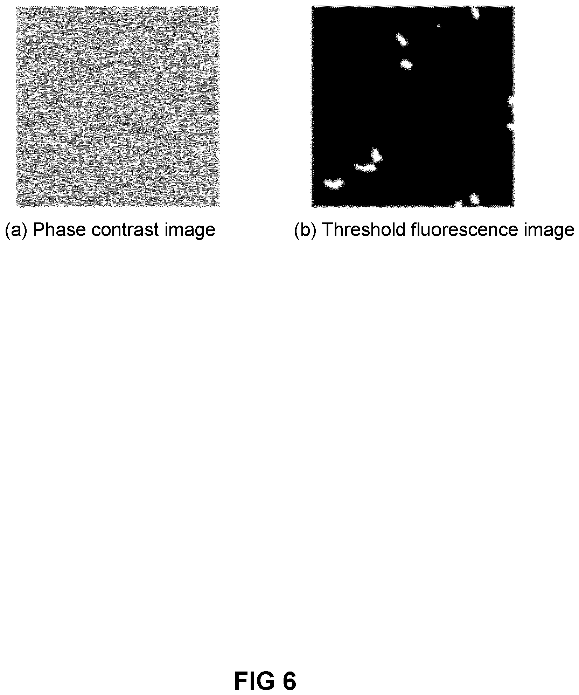

**Fig. 6** shows examples of a phase contrast image of cells and of a fluorescence image of the cells. Specifically, Figs. 6(a) and 6(b) show nucleus labelled A549-cells imaged using phase contrast imaging and fluorescence imaging, respectively. The fluorescence image (Fig. 6(b)) has been thresholded, meaning that all pixels with a nucleus marker expression above the threshold are white and remaining pixels are black. Note that the phase contrast image (Fig. 6(a)) is very low contrast and the complete cell morphologies is far more complex compared to the nuclei in the thresholded fluorescence image (Fig. 6(b)).

Referring again to Fig. 5, the fluorescence image sequence 50 may be used for calculating cell center points at step S102 and the center points may be matched through time at step S104. Further, at step S106, annotations indicating movements of each cell in the fluorescence image sequence 50 may be converted to a format that is suitable for training the machine learning model 30.

The annotations generated at step S106 and the phase contrast image sequence 52 may then be used for training the machine learning model 30 that can take only the phase contrast image sequence as an input and does not require fluorescence images for tracking the cells in the phase contrast image sequence.

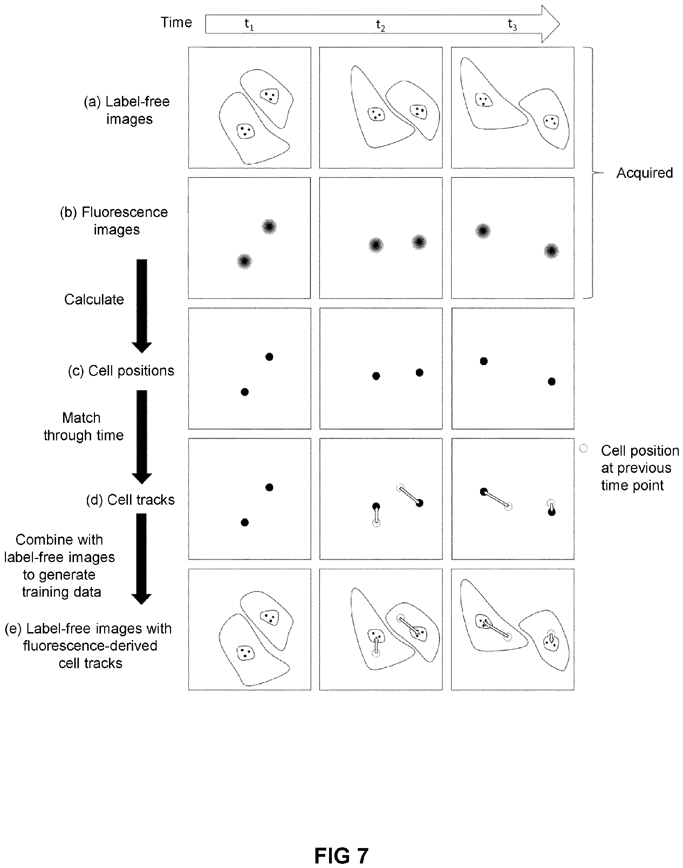

**Fig. 7** shows an illustration of how pairs of label-free images and fluorescence images may be used to construct training data for the machine learning model 30. Fig. 7(a) shows three exemplary label-free images of cells captured at time points $t_1$, $t_2$ and $t_3$. The label-free images in Fig. 7(a) may be a part of the second time-lapse sequence. Further, Fig. 7(b) shows three exemplary fluorescence images corresponding to the exemplary label-free images shown in Fig. 7(a), also captured at time points $t_1$, $t_2$ and $t_3$ (e.g., within a specified delay). The fluorescence images shown in Fig. 7(b) may be a part of the first time-lapse sequence. Fig. 7(c) shows cell positions in each of the fluorescence images at time points $t_1$, $t_2$ and $t_3$, calculated from each of the fluorescence images (cf. step S102 of Figs. 4 and 5). Fig. 7(d) shows cell tracks derived by matching the cell positions shown in Fig. 7(c) through time with an object tracking algorithm (cf. steps S104 of Figs. 4 and 5). It can be seen from Fig. 7(d) that annotations may indicate movements of each cell from the cell position at a previous time point to the cell position at a current time point. Fig. 7(e) shows label-free images with fluorescence-derived cell tracks obtained by combining the label-free images shown in Fig. 7(a) and the cell tracks shown in Fig. 7(d) (cf. step S106 of Figs. 4 and 5). The combination of the label-free images and the cell tracks derived from the fluorescence images as shown in Fig. 7(d) may be used as the training data for the machine learning model 30 (cf. step S108 of Figs. 4 and 5).

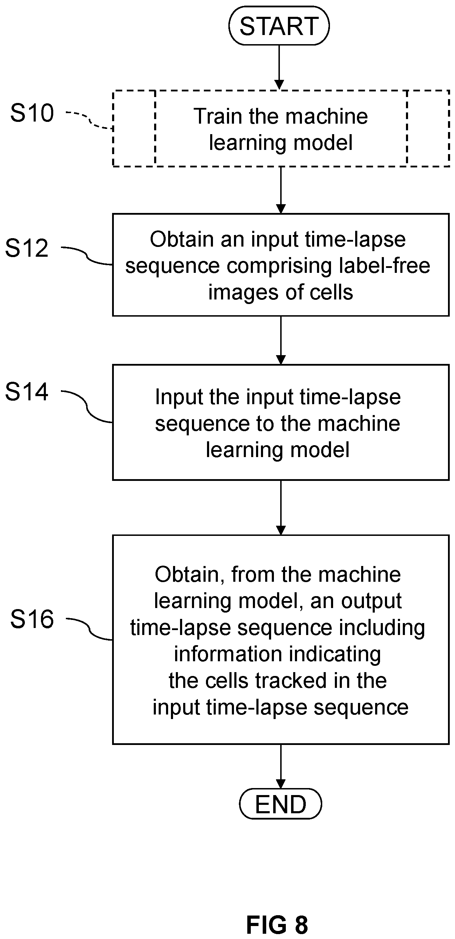

**Fig. 8** shows a flowchart of an exemplary process for label-free cell tracking. The exemplary process of Fig. 8 may be performed by the processor 202 of the computing device 20. The processor 202 may start the exemplary process shown in Fig. 8 when a user instructs the computing device 20 to start label-free cell tracking, using an input device (not shown) connected to the computing device 20, for example.

At step S10, the processor 202 may train the machine learning model 30. For example, the processor 202 may perform the exemplary process shown in Fig. 4 for training the machine learning model 30 as described above. In some circumstances, however, when the machine learning model 30 that has already been trained is available (e.g., stored in the storage medium 204, received from another computing device (not shown), etc.), the processor 202 may skip step S10.

After step S10 (or in case step S10 is skipped, right after the start of the process), the exemplary process of Fig. 8 may proceed to step S12.

At step S12, the processor 202 may obtain an input time-lapse sequence comprising label-free images of cells. The input time-lapse sequence may be a third time-lapse sequence that is different from the second time-lapse sequence used in the training step S10 (cf. steps S100 and S108 of Figs. 4 and 5). The processor 202 may obtain the input time-lapse sequence from the live-cell imaging system 400, for example. In some exemplary embodiments, the processor 202 may receive the input time-lapse sequence via a computer that is separate from the computing device 20 and that obtains the input time-lapse sequence from the live-cell imaging device 400. Such a computer may be, for example, a workstation (not shown) associated with and connected to the live-cell imaging system 400 or a computer comprised in a database system that store and manage images captured by the live-cell imaging system 400.

A frame rate of the input time-lapse sequence obtained at step S12 is preferably the same frame rate as the time-lapse sequence of label-free images used as an input to the machine learning model 30 during the training.

After step S12, the exemplary process of Fig. 8 may proceed to step S14.

At step S14, the processor 202 may input the input time-lapse sequence obtained at step S12 to the machine learning model 30. After step S14, the exemplary process of Fig 8 may proceed to step S16.

At step S16, the processor 202 may obtain, from the machine learning model 30, an output time-lapse sequence including information indicating the cells tracked in the input time-lapse sequence. After step S16, the exemplary process of Fig. 8 may end.

### Possible Advantages

Any one of the exemplary embodiments described above may provide a two-step experiment to rapidly enable robust cell tracking in new conditions by first running a high frame rate calibration experiment with a nuclear fluorescence dye added to the cell culture. Existing tracking algorithms may work well to track fluorescently labelled nuclei under high frame rate and may be used to generate ground truth tracks for cells. The generated tracks (e.g., annotations) may then be used as ground truth to train label-free tracking algorithms possibly under a low frame rate, by discarding the fluorescence channel and only using the tracks, for example. In this way, a workflow may be provided to generate robust tracks that can be adopted to user needs with minimal effort.

As described above, the label-free cell tracking according to the present disclosure employs a machine learning model. Machine learning models are usually specific to the domain of the data they were trained on. This may mean that, to guarantee high performance models on, for instance, a new cell type, training data on that cell type should be collected. Since there are roughly 200 cell types in the human body that can be combined in different kinds of co-cultures and being subject to thousands of different treatments/conditions, combinatorics makes the number of potential data domains extremely large. Accordingly, generating one global tracking model applicable to all possible experiments may be challenging.

A more realistic approach than generating one global tracking model to cover more domains may be enabling biologists to customize label-free tracking models for their specific experiment of interest. This may not be feasible, either, due to the effort and time required for generating appropriate training data.

As described above, in the label-free cell tracking according to the present disclosure, training data can be generated quickly (since most cell based assays complete in a matter of days) at a low cost (since nucleus labels used for generating the training data may be inexpensive). The trained machine learning model according to the present disclosure can then be implemented, for example, as a software module, which can create a custom label-free tracking model for a user (e.g., biologist) after running a single setup experiment with fluorescently labelled nuclei. The trained model can then be used in future experiments without needing the nucleus label.

### Case Study

The following provides an exemplary case study of the label-free cell tracking to demonstrate a possible implementation of the present disclosure.

In this case study, the machine learning model 30 has a configuration as shown in the example of Fig. 2. Specifically, the machine learning model 30 in this case study has the detector 32 and the tracker 34 as shown in Fig. 2.

Further, as shown in this case study, a live-cell imaging system 400 as shown in Fig. 3 may be used for capturing fluorescent and label-free image sequences.

a) Detector

In this case study, the detector 32 comprises a model for object detection called YOLOX (see e.g., Ge, Zheng, et al., "Yolox: Exceeding yolo series in 2021", arXiv preprint arXiv:2107.08430, 2021). While training the detector 32, an input label-free image from a given input video (e.g., the second time-lapse sequence as the input video sequence 60) is passed to the detector 32 along with center point annotation of each cell as it may be identified using a fluorescence image corresponding to the input label-free image, for example. This point annotation is used to draw a virtual bounding box on the cell and further used for the training. The training may be performed according to the exemplary process described above with reference to Figs. 4 to 7.

While inferencing (e.g., at steps S14 and S16 of Fig. 8), the detector 32 predicts the bounding box for each cell in the image and gives a confidence score for each detection.

b) Tracker

Further, in this case study, after the successful detection of cells in the input video, the tracker 34 tracks throughout its lifecycle using a two-step association approach called ByteTrack described in Zhang et al., "ByteTrack: Multi-object tracking by associating every detection box", arXiv preprint arXiv:2110.06864, 2021.

Most of existing tracking methods (see e.g., S.-H. Bae and K.-J. Yoon, "Robust online multi-object tracking based on tracklet confidence and online discriminative appearance learning", In Proceedings of the IEEE conference on computer vision and pattern recognition, pages 1218- 1225, 2014; J. Berclaz, F. Fleuret, E. Turetken, and P. Fua, "Multiple object tracking using k-shortest paths optimization", IEEE transactions on pattern analysis and machine intelligence, 33(9):1806-1819, 2011; P. Bergmann, T. Meinhardt, and L. Leal-Taixe, "Tracking without bells and whistles", In ICCV, pages 941-951, 2019) deal with detections of true positives and true negatives with the help of a confidence threshold. However, in some cases, low confidence detection boxes may also indicate the existence of a cell e.g., overlapping cells. This is a scenario seen very often in cell tracking as the cells cluster together and some of the cells become occluded for some time and their confidence score will be low. Filtering out such cells may cause irreversible errors for cell tracking and bring non-negligible missing detections and fragmented trajectories. This challenge is effectively handled in this case study by using the two-step association method, namely, in the first step, only the cells with high detection scores are associated, and later, in the second step, the remaining cells which have low detection scores are associated using the similarity with the tracklets for recovery of the true missing cells.

c) Evaluation Metrics

To evaluate the performance of the method according to the present disclosure, five different evaluation metrics are used in this case study. Each metric provides a different lens to look at the results from different perspectives.

• Multiple Object Tracking Accuracy (MOTA)

Multiple object tracking accuracy (MOTA) may measure the overall accuracy of both the tracker and the detection.

$$MOTA = 1 - \frac{\sum_t (m_t + fp_t + mme_t)}{\sum_t g_t} \qquad (1)$$

In the above Equation (1), $mt$, $fpt$, and $mmet$ may represent the number of misses, false positives, and mismatches, respectively. Misses may be objects (e.g., cells in this case study) present in the ground truth (e.g., a combination of label-free images and the annotations derived from fluorescence images corresponding to the label-free images) but not detected by the detection algorithm. False positives may be objects which are not present in the ground truth, but the detection algorithm detects them as objects. Mismatches may occur when an object is falsely related to the ground truth of some other object due to false tracking.

• Identification F1 Score (IDF$_1$)

IDF$_1$ may calculate bijective (one-to-one) mapping between the sets of ground truth trajectories and prediction trajectories. The metric IDF$_1$ may be the ratio of correctly identified detections over the average number of ground truth and computed detections.

$$IDF_1 = \frac{2IDTP}{2IDTP + IDFP + IDFN} \qquad (2)$$

In the above Equation (2), IDTP (Identity true positives) may be the number of true positive ID matches. This can be seen as the percentage of detections correctly assigned in the whole sequence. IDFP (Identity false positives) may denote the sum of false positive IDs. This can be seen as the percentage of detections falsely assigned in the whole sequence. IDFN (Identity false negatives) may be the number of false negative IDs. This can be seen as the percentage of detections undetected in the whole sequence.

• Identity Switches (IDs)

Identity Switches may be the number of identity switches i.e., how many times a given trajectory changes from one ground truth object to another.

• Mostly Tracked (MT)

If an object is successfully tracked for at least 80% of its lifespan it is regarded as Mostly Tracked.

• Mostly Lost (ML)

If an object is successfully tracked for at most 20% of its life span it is regarded as Mostly Lost.

d) Experimental Setup

In this case study, a dataset containing 64 videos (sequences of images) of fixed length captured with a scratch wound assay, a type of biological experiment used to measure cell motility was used. The dataset consists of HT1080 cells, prepared in a scratch wound assay by seeding cells at 20k cell/well, letting adhere overnight and then wounding the confluent monolayer. Images may then acquired over time using phase contrast imaging and fluorescence imaging while cells migrate to fill the wound. Cells were treated in four conditions, where they were covered by Matrigel, treated migration inhibiting drug CytoD, both or neither. Table 1 below shows different conditions under which different sequences are treated.

Table 1

|  | Covered by a Gel | Not covered by a Gel |
|---|---|---|
| Drug-treated | Sequence F | Sequence D |
| Not drug-treated | Sequence E | Sequence C |

Sequences of phase contrast images may be manually annotated for point-based tracking to manually create training data. The 64 videos dataset was further divided into train and test set, each with 32 sequences. For training the detector 32, a learning rate of 3.75e-05, a momentum of 0.9, and a batch size of 48 were used. The training was performed on NVIDIA DGX-1 server hosting eight NVIDIA Tesla V100 GPUs with 32 Gb of GPU RAM each, dual 20 Core 2.2 GHz intel Xeon CPUs and 512 Gb system RAM. The model was trained for 40 epochs.

In this case study, first, the results for each sequence are inspected separately and their link with the morphological properties of each sequence is discussed. In addition to that, the overall results are considered for all the sequences combined.

e) Results

In summary, the approach according to the present disclosure can track cells reliably even in a high density, high motility assay such as a track assay. Table 2 below shows overall results of the proposed tracking approach on test set of scratch wound dataset. The best results are shown in bold characters in Table 2.

Table 2

| Sequence | MOTA | $IDF_1$ | IDS | MT | ML |
|---|---|---|---|---|---|
| C | 63.1 | 55.1 | 3.7 | 69.5 | 3.6 |
| D | **85.7** | **89.1** | 0.4 | 75.5 | 19.2 |
| E | 53.1 | 55.8 | 3.7 | 71.3 | **3.0** |
| F | 80.8 | 88.8 | **0.3** | **76.2** | 17.9 |
| OVERALL | 72.3 | 70.7 | 2.1 | 67.5 | 13.5 |

As shown in Table 1, the C sequence was neither covered by a gel nor drug-treated, which caused the cells to move more abruptly. For the C sequence, the MOTA score of 63.1% was achieved. For comparison, the current state-of-the-art MOTA in tracking objects in "natural" videos is 64.5% (see e.g., https://motchallenge.net/results/MOT15/), showing that the MOTA-score in this case study is highly competitive. For the D sequence, the best MOTA and the best $IDF_1$ scores were achieved among all the sequences. The movement of the cells in the D sequence was restricted to a certain degree because it was drug treated (see Table 1). For the E sequence, the worst MOTA and $IDF_1$ scores were obtained. The second-best MOTA and $IDF_1$ scores are seen across sequence F. The cells in the F sequence had the most restricted movements because it was both covered by a gel and drug-treated, making it hard for cells to move freely.

The results of this case study demonstrate that the label-free cell tracking according to the present disclosure is feasible.

**Hardware Configuration**

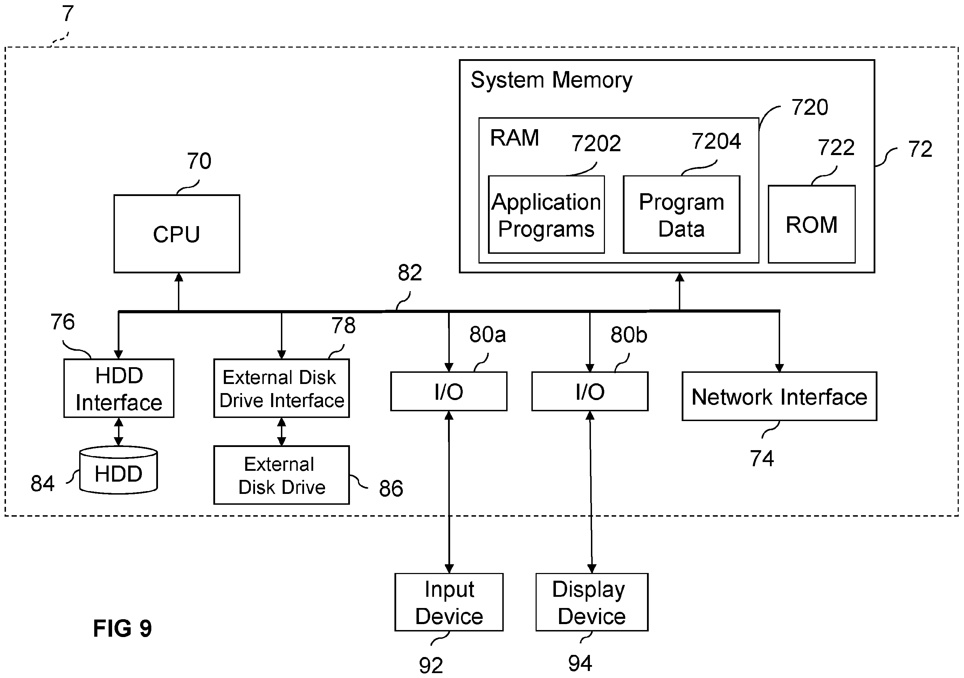

**Fig. 9** shows an exemplary hardware configuration of a computer that may be used to implement at least a part of the system as described above. For example, the computing device 20 and/or at least part of the live-cell imaging system 400 shown in Fig. 1 may be implemented with the computer 7 shown in Fig. 9. The computer 7 shown in Fig. 9 includes a central processing unit (CPU) 70, a system memory 72, a network interface 74, a hard disk drive (HDD) interface 76, an external disk drive interface 78 and input/output (I/O) interfaces 80. These components of the computer are coupled to each other via a system bus 82. The CPU 70 may perform arithmetic, logic and/or control operations by accessing the system memory 72. The system memory 72 may store information and/or instructions for use in combination with the CPU 70. The system memory 72 may include volatile and non-volatile memory, such as a random access memory (RAM) 720 and a read only memory (ROM) 722. A basic input/output system (BIOS) containing the routines that helps to transfer information between elements within the computer 7, such as during start-up, may be stored in the ROM 722. The system bus 82 may be any of several types of bus structures including a memory bus or memory controller, a peripheral bus, and a local bus using any of a variety of bus architectures.

The computer may include a network interface 74 for communicating with other computers and/or devices via a network.

Further, the computer may include a hard disk drive (HDD) 84 for reading from and writing to a hard disk (not shown), and an external disk drive 86 for reading from or writing to a removable disk (not shown). The removable disk may be a magnetic disk for a magnetic disk drive or an optical disk such as a CD ROM for an optical disk drive. The HDD 84 and the external disk drive 86 are connected to the system bus 82 by a HDD interface 76 and an external disk drive interface 78, respectively. The drives and their associated computer-readable media provide non-volatile storage of computer-readable instructions, data structures, program modules and other data for the general purpose computer. The data structures may include relevant data for the implementation of the exemplary method and its variations as described herein. The relevant data may be organized in a database, for example a relational or object database.

Although the exemplary environment described herein employs a hard disk (not shown) and an external disk (not shown), it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 722 or RAM 720, including an operating system (not shown), one or more application programs 7202, other program modules (not shown), and program data 7204. The application programs may include at least a part of the functionality as described above.

The computer 7 may be connected to an input device 92 such as mouse and/or keyboard and a display device 94 such as liquid crystal display, via corresponding I/O interfaces 80a and 80b as well as the system bus 82. In case the computer 7 is implemented as a tablet computer, for example, a touch panel that displays information and that receives input may be connected to the computer 7 via a corresponding I/O interface and the system bus 82. Further, in some examples, although not shown in Fig. 9, the computer 7 may further be connected to a printer and/or an imaging device such as a camera, via corresponding I/O interfaces and the system bus 82.

In addition or as an alternative to an implementation using a computer 7 as shown in Fig. 9, a part or all of the functionality of the exemplary embodiments described herein may be implemented as one or more hardware circuits. Examples of such hardware circuits may include but are not limited to: Large Scale Integration (LSI), Reduced Instruction Set Circuits (RISC), Application Specific Integrated Circuit (ASIC) and Field Programmable Gate Array (FPGA).

**Claims**

1.  A computer-implemented method for label-free cell tracking, the method comprising:

    obtaining a first time-lapse sequence (50) of cells and a second time-lapse sequence (52) of the cells, wherein:

    the first time-lapse sequence (50) comprises fluorescence images of the cells,
    the second time-lapse sequence (52) comprises label-free images of the cells, the label-free images corresponding to the fluorescence images in the first time-lapse sequence (50), and
    each one of the fluorescence images in the first time-lapse sequence (50) is captured at a time point corresponding to a time point at which a corresponding one of the label-free images in the second time-lapse sequence (52) is captured;

    identifying, within each one of the fluorescence images in the first time-lapse sequence (50), positions of the cells;
    matching, using an object tracking algorithm, the identified positions of each one of the cells through time in the fluorescence images in the first time-lapse sequence (50);
    generating, based on the matching, annotations indicating movements of each one of the cells through time; and
    training a machine learning model (30) using the second time-lapse sequence (52) and the generated annotations, the machine learning model (30) being trained to track cells in an input time-lapse sequence including label-free images.

2. The method according to claim 1, further comprising:

obtaining a third time-lapse sequence of cells, the third time-lapse sequence including label-free images of the cells;
inputting the third time-lapse sequence as the input time-lapse sequence to the trained machine learning model (30); and
obtaining, from the trained machine learning model (30), an output time-lapse sequence including information indicating the cells tracked in the third time-lapse sequence.

3. The method according to any one of the preceding claims, wherein:

the time point at which one of the fluorescence images in the first time-lapse sequence (50) is captured, and
the time point at which the corresponding one of the label-free images in the second time-lapse sequence (52) is captured,
occur within a specified delay.

4. The method according to any one of the preceding claims, wherein each pixel in each one of the fluorescence images in the first time-lapse sequence (50) has a corresponding pixel in the corresponding one of the label-free images in the second time-lapse sequence (52).

5. The method according to any one of the preceding claims, wherein a frame rate of the input time-lapse sequence for the machine learning model (30) is equal to or lower than a frame rate of the first and second time-lapse sequences (50, 52).

6. The method according to any one of the preceding claims, wherein the annotations include, for each one of the cells in each one of the fluorescence images, information indicating:

a current position of said one of the cells in said one of the fluorescence images; and
a previous position of said one of the cells in a previous one of the fluorescence images comprised in one frame prior to a frame comprising said one of the fluorescence images.

7. The method according to any one of the preceding claims, wherein the positions of the cells identified within each one of the fluorescence images in the first time-lapse sequence (50) represent positions of center points of the cells, each center point being a nucleus center of mass of each cell.

8. The method according to any one of the preceding claims, wherein the label-free images are phase contrast images, brightfield images or darkfield images.

9. The method according to any one of the preceding claims, wherein the fluorescence images are captured using a nucleus fluorescent marker.

10. The method according to any one of the preceding claims, wherein the machine learning model (30) comprises an artificial neural network.

11. The method according to any one of the preceding claims, wherein the machine learning model (30) comprises:

a detector (32) configured to detect positions of the cells in the input time-lapse sequence; and
a tracker (34) configured to track each detected cell in the input time-lapse sequence through time.

12. A computer-implemented method for label-free cell tracking, the method comprising:

obtaining an input time-lapse sequence including label-free images of cells;
inputting the input time-lapse sequence to a machine learning model (30) that is trained to track cells in the input time-lapse sequence; and
obtaining, from the machine learning model (30), an output time-lapse sequence including information indicating the cells tracked in the input time-lapse sequence,

wherein the machine learning model (30) has been trained by:

obtaining a first time-lapse sequence (50) of cells and a second time-lapse sequence (52) of the cells, wherein:

the first time-lapse sequence (50) comprises fluorescence images of the cells,
the second time-lapse sequence (52) comprises label-free images of the cells, the label-free images in the second time-lapse sequence (52) corresponding to the fluorescence images in the first time-lapse sequence (50), and
each one of the fluorescence images in the first time-lapse sequence (50) is captured at a time point corresponding to a time point at which a corresponding one of the label-free images in the second time-lapse sequence (52) is captured;

identifying, within each one of the fluorescence images in the first time-lapse sequence (50), positions of the cells;
matching, using an object tracking algorithm, the identified positions of each one of the cells through time in the fluorescence images in the first time-lapse sequence (50);
generating, based on the matching, annotations indicating movements of each one of the cells through time; and
training the machine learning model (30) using the second time-lapse sequence (52) and the generated annotations.

13. A computer program product comprising computer-readable instructions that, when loaded and run on a computer, cause the computer to perform the method according to any one of the preceding claims.

14. A system for label-free cell tracking, the system comprising:

a processor (202) configured to perform the method according to any one of claims 1 to 12; and
a live-cell imaging system (400) comprising:

a fluorescence optics module (402) configured to obtain fluorescence images of cells; and
a label-free optics module (404) configured to obtain label-free images of the cells,

wherein the live-cell imaging system (400) is configured to capture a fluorescence image by the fluorescence optics module (402) and a label-free image by the label-free optics module such that:

the time point at which one of the fluorescence images in the first time-lapse sequence (50) is captured, and
the time point at which the corresponding one of the label-free images in the second time-lapse sequence (52) is captured,
occur within a specified delay.

**FIG 1**

Input
Video
Sequence

— 60

— 30: Machine Learning Model

Detector

— 32

Tracker

— 34

Output Video
Sequence
(with each
cell tracked)

— 62

**FIG 2**

Fluorescence Optics
Module 402 /
Label-Free Optics
Module 403

**FIG 3**

START

S100 — Obtain a first time-lapse sequence including fluorescence images of cells and a second time-lapse sequence including label-free images of the cells

S102 — Identify positions of the cells within each one of the fluorescence images in the first time-lapse sequence

S104 — Match the identified positions of each one of the cells through time in the fluorescence images in the first time-lapse sequence using an object tracking algorithm

S106 — Based on the matching, generate annotations indicating movements of each one of the cells through time

S108 — Train the machine learning model using the second time-lapse sequence and the generated annotations

END

**FIG 4**

FIG 5

(a) Phase contrast image          (b) Threshold fluorescence image

# FIG 6

Time    t₁    t₂    t₃

(a) Label-free images

(b) Fluorescence images

Calculate

(c) Cell positions

Match through time

(d) Cell tracks

Combine with label-free images to generate training data

(e) Label-free images with fluorescence-derived cell tracks

Acquired

Cell position at previous time point

**FIG 7**

START

S10 ----- Train the machine
learning model

S12 ---- Obtain an input time-lapse
sequence comprising label-free
images of cells

S14 ---- Input the input time-lapse
sequence to the machine
learning model

S16 ---- Obtain, from the machine
learning model, an output
time-lapse sequence including
information indicating
the cells tracked in the
input time-lapse sequence

END

**FIG 8**

FIG 9

Europäisches
Patentamt

European
Patent Office

Office européen
des brevets

# EUROPEAN SEARCH REPORT

**Application Number**

EP 24 16 3290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TSUZUKI YUJI ET AL: "Pseudo-nuclear staining of cells by deep learning improves the accuracy of automated cell counting in a label-free cellular population", JOURNAL OF BIOSCIENCE AND BIOENGINEERING, ELSEVIER, AMSTERDAM, NL, vol. 131, no. 2, 17 October 2020 (2020-10-17), pages 213-218, XP086476238, ISSN: 1389-1723, DOI: 10.1016/J.JBIOSC.2020.09.014 [retrieved on 2020-10-17] * the whole document * | 1-14 | INV. G06T7/246 |
| Y | KAZUYA NISHIMURA ET AL: "Weakly-Supervised Cell Tracking via Backward-and-Forward Propagation", ARXIV.ORG, CORNELL UNIVERSITY LIBRARY, 201 OLIN LIBRARY CORNELL UNIVERSITY ITHACA, NY 14853, 30 July 2020 (2020-07-30), XP081729438, * the whole document * | 1-14 | |
| A | WO 2023/091970 A1 (MASSACHUSETTS GEN HOSPITAL [US]; BROAD INST INC [US] ET AL.) 25 May 2023 (2023-05-25) * paragraph [0419] - paragraph [0574] * | 1-14 | TECHNICAL FIELDS SEARCHED (IPC)  G06T |

The present search report has been drawn up for all claims

| Place of search | Date of completion of the search | Examiner |
|---|---|---|
| Munich | 31 July 2024 | Rockinger, Oliver |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
  ..............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 16 3290

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | Publication date | Patent family member(s) | Publication date |
|---|---|---|---|
| WO 2023091970 A1 | 25-05-2023 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ULMAN** ; **VLADIMIR et al.** An objective comparison of cell-tracking algorithms. *Nature methods*, 2017, vol. 14 (12), 1141-1152
- Cell tracking with deep learning for cell detection and motion estimation in low-frame-rate. **HAYASHIDA et al.** International Conference on Medical Image Computing and Computer-Assisted Intervention. Springer, 2019
- **GE, ZHENG et al.** Yolox: Exceeding yolo series in 2021. *arXiv preprint arXiv:2107.08430*, 2021
- **ZHANG, YIFU et al.** ByteTrack: Multi-object tracking by associating every detection box. *arXiv preprint arXiv:2110.06864*, 2021
- **ZHOU et al.** Tracking Objects as Points. *arXiv:2004.01177*, 2020
- **HAYASHIDA et al.** Consistent Cell Tracking in Multi-Frames With Spatio-Temporal Context by Object-Level Warping Loss. *Proceedings of the IEEE/CVF Winter Conference on Applications of Computer Vision*, 2022
- **HAYASHIDA et al.** MPM: Joint representation of motion and position map for cell tracking. *Proceedings of the IEEE/CVF Conference on Computer Vision and Pattern Recognition*, 2020
- **ZHANG et al.** ByteTrack: Multi-object tracking by associating every detection box. *arXiv preprint arXiv:2110.06864*, 2021
- **S.-H. BAE** ; **K.-J. YOON**. Robust online multi-object tracking based on tracklet confidence and online discriminative appearance learning. *In Proceedings of the IEEE conference on computer vision and pattern recognition*, 2014, 1218-1225
- **J. BERCLAZ** ; **F. FLEURET** ; **E. TURETKEN** ; **P. FUA**. Multiple object tracking using k-shortest paths optimization. *IEEE transactions on pattern analysis and machine intelligence*, 2011, vol. 33 (9), 1806-1819
- **P. BERGMANN** ; **T. MEINHARDT** ; **L. LEAL-TAIXE**. Tracking without bells and whistles. *In ICCV*, 2019, 941-951